Europäisches Patentamt

European Patent Office

Office européen des brevets

(19)

(11) Veröffentlichungsnummer: **0 239 909**
**A2**

(12) # EUROPÄISCHE PATENTANMELDUNG

(21) Anmeldenummer: 87104290.9

(51) Int. Cl.⁴: **B23Q 3/157**

(22) Anmeldetag: 24.03.87

(30) Priorität: 02.04.86 DE 3610977

(43) Veröffentlichungstag der Anmeldung:
07.10.87 Patentblatt 87/41

(84) Benannte Vertragsstaaten:
AT BE CH DE ES FR GB GR IT LI LU NL SE

(71) Anmelder: **Michael Weinig GmbH**
**Weinigstrasse 2/4**
**D-6972 Tauberbischofsheim(DE)**

(72) Erfinder: **Heiermann, Klaus, Dr.-Ing.**
**Altenbergring 56**
**D-6991 Igersheim(DE)**

(74) Vertreter: **Jackisch, Walter, Dipl.-Ing.**
**Menzeistrasse 40**
**D-7000 Stuttgart 1(DE)**

(54) **Vorrichtung zum Wechsein von Werkzeugen einer Bearbeitungsmaschine, vorzugsweise einer Holzbearbeitungsmaschine.**

(57) Die Vorrichtung dient zum Wechseln von Werkzeugen (2) einer Bearbeitungsmaschine, die mit mindestens einer Arbeitsspindel (3) für das Werkzeug versehen ist. Die Vorrichtung hat einen quer zur Arbeitsspindel (3) verstellbaren Träger (7) mit zwei Aufnahmen (8,9) für die Werkzeuge (2). Zum Ein- und Auswechseln der Werkzeuge (2) dient eine parallel zur Arbeitsspindel (3) verstellbare Greifeinrichtung (25,26). Mit ihr können die Werkzeuge (2) vollautomatisch ein-und ausgewechselt werden.

Fig. 1

# Vorrichtung zum Wechseln von Werkzeugen einer Bearbeitungsmaschine, vorzugsweise einer Holzbearbeitungsmaschine

Die Erfindung betrifft eine Vorrichtung zum Wechseln von Werkzeugen einer Bearbeitungsmaschine, vorzugsweise einer Holzbearbeitungsmaschine, nach dem Oberbegriff des Anspruches 1.

Bei Bearbeitungsmaschinen, insbesondere bei Holzbearbeitungsmaschine, werden die Werkzeuge häufig noch von Hand ein-und ausgewechselt. Sind die Werkzeuge gewichtsmäßig leicht, dann lassen sie sich noch verhältnismäßig einfach auswechseln. Handelt es sich aber um größere und gewichtsmäßig schwere Werkzeuge, bereitet es erhebliche Mühe, die Werkzeuge einfach und vor allen Dingen auch rasch auszuwechseln.

Der Erfindung liegt die Aufgabe zugrunde, eine Vorrichtung zu schaffen, mit der die Werkzeuge der Bearbeitungsmaschine einfach und rasch ausgewechselt werden können.

Diese Aufgabe wird bei der gattungsgemäßen Vorrichtung erfindungsgemäß mit den kennzeichnenden Merkmalen des Anspruches 1 gelöst.

Mit der erfindungsgemäßen Vorrichtung können die Werkzeuge voll-automatisch ein-und ausgewechselt werden. Der quer zur Arbeitsspindel verstellbare Träger wird zunächst so in bezug auf die Arbeitsspindel verstellt, daß in seine eine Aufnahme das auf der Arbeitsspindel sitzende Werkzeug eingesetzt werden kann. Hierzu wird das auf der Arbeitsspindel sitzende Werkzeug mit dem Greifer der Greifeinrichtung in die Aufnahme geschoben. In der anderen Aufnahme des Trägers befindet sich das einzuwechselnde Werkzeug. Wenn mit der Greifeinrichtung das Werkzeug von der Arbeitsspindel abgezogen worden ist, kann der Träger so verstellt werden, daß die andere Aufnahme fluchtend zur Arbeitsspindel der Bearbeitungsmaschine liegt. Mit dem Greifer läßt sich dann dieses Werkzeug aus der Aufnahme auf die Arbeitsspindel schieben. Mit der erfindungsgemäßen Vorrichtung lassen sich auch gewichtsmäßig schwere Werkzeuge innerhalb kürzester Zeit einfach ein-und auswechseln. Die Stillstandzeiten der Bearbeitungsmaschine können dadurch sehr kurz gehalten werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1 teilweise in Seitenansicht und teilweise im Schnitt eine erfindungsgemäße Werkzeugwechselvorrichtung, die an eine Bearbeitungsmaschine angeschlossen ist,

Fig. 2 die Werkzeugwechselvorrichtung gemäß Fig. 1 in Vorderansicht,

Fig. 3 bis 10 das Auswechseln eines Werkzeuges durch die erfindungsgemäße Werkzeugwechselvorrichtung.

Die Werkzeugwechselvorrichtung ist im Ausführungsbeispiel eine Anbaueinheit, die nachträglich an eine Bearbeitungsmaschine 1, vorzugsweise eine Holzbearbeitungsmaschine, angeschlossen werden kann. Mit der Werkzeugwechselvorrichtung lassen sich Werkzeuge 2 automatisch auswechseln, die auf einer Arbeitsspindel 3 der Bearbeitungsmaschine 1 drehfest sitzen. Mit der Werkzeugwechselvorrichtung können die Werkzeuge auf nur einer oder auch auf mehreren Arbeitsspindeln ausgewechselt werden. Die Arbeitsspindeln 3 können horizontal, wie im Ausführungsbeispiel, und auch vertikal angeordnet sein.

Die Werkzeugwechselvorrichtung ist im Ausführungsbeispiel mit einem Träger 4 versehen, der mittels wenigstens einer vertikalen Achse 5 - schwenkbar an der Bearbeitungsmaschine 1 gelagert ist. Die Werkzeugwechselvorrichtung ist mit einer vertikalen Führung 6 versehen, längs der ein Schlitten 7 verfahrbar ist. Die Führung 6 wird vorzugsweise durch eine Schwalbenschwanznut im Träger 4 gebildet, der vorzugsweise gehäuseförmig ausgebildet ist. Der Schlitten 7 trägt zwei mit Abstand senkrecht übereinander angeordnete Dorne 8 und 9, auf denen die Werkzeuge 2 und 10 gelagert werden.

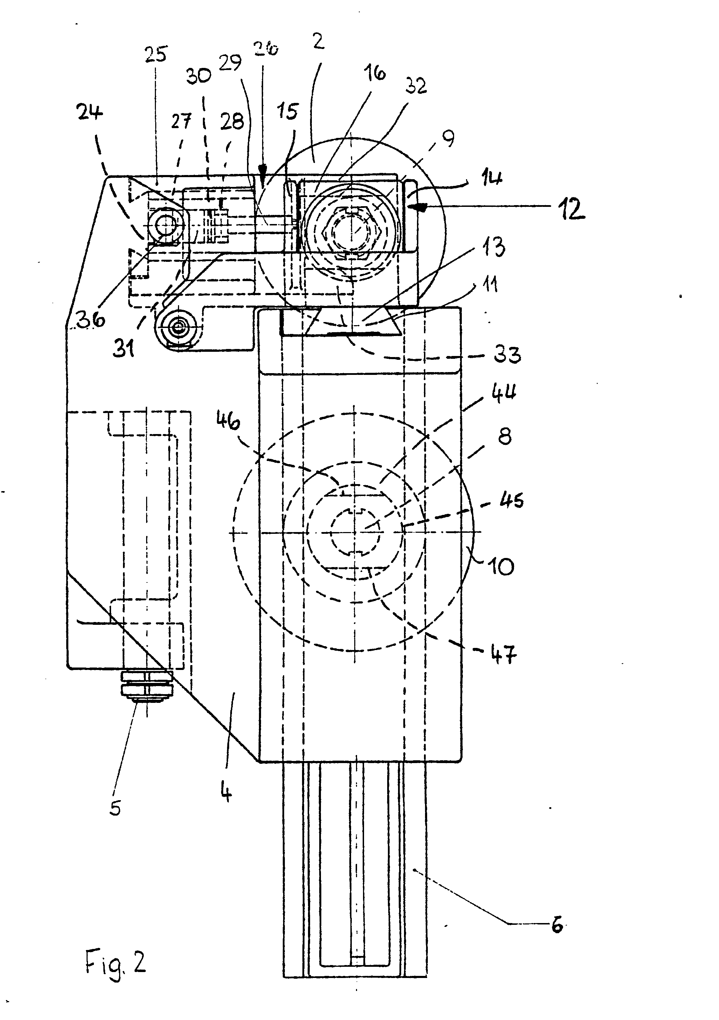

Der Träger 4 ist außerdem mit einer horizontalen Führung 11 versehen (Fig. 2), längs derer ein weiterer Schlitten 12 verfahrbar ist. Die horizontale Führung 11 wird vorzugsweise durch eine Schwalbenschwanznut gebildet, in die der Schlitten 12 mit einem entsprechenden Steg 13 (Fig. 2) eingreift. Der Schlitten 12 hat zwei parallel zueinander liegende Seitenwände 14 und 15 (Fig. 2), zwischen denen ein Schrauber 16 angeordnet ist, der sich auf einem Boden 17 des Schlittens 12 abstützt.

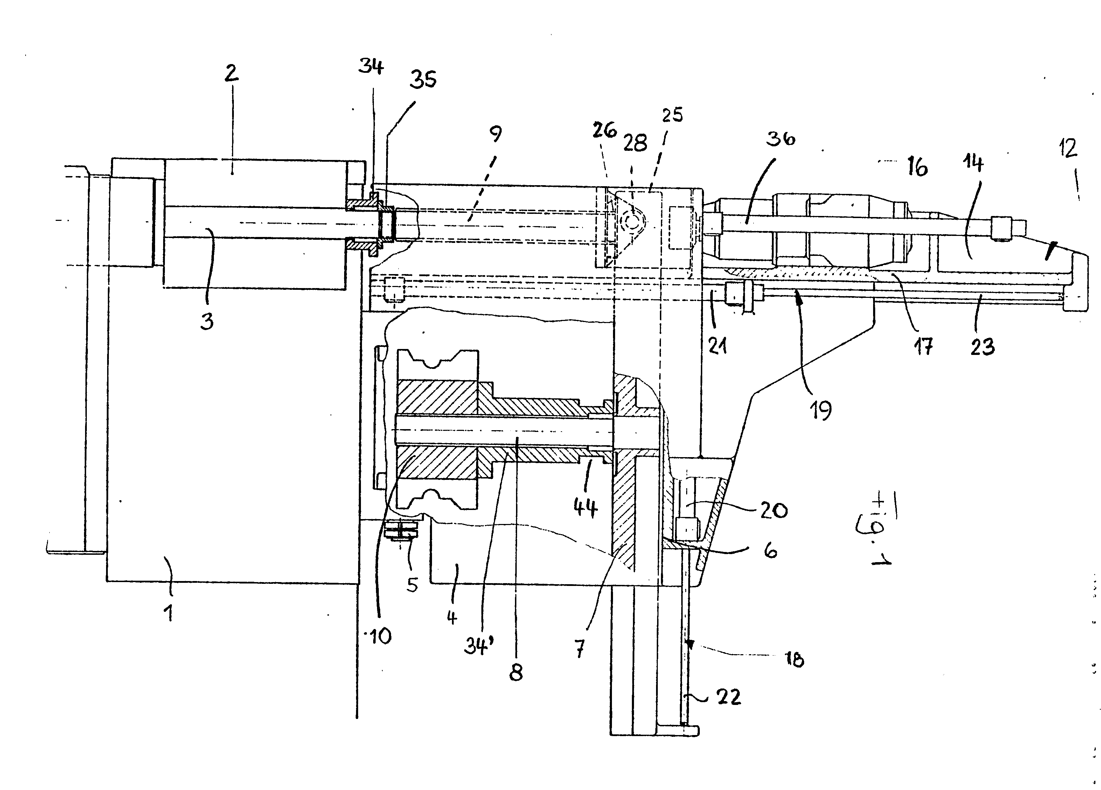

Zum Verfahren des Schlittens 7 ist vorzugsweise eine Kolben-Zylinder-Anordnung 18 (Fig. 1) vorgesehen, mit der der Schlitten 7 vertikal verfahren werden kann. Zum Verschieben des Schlittens 12 ist vorzugsweise ebenfalls eine Kolben-Zylinder-Anordnung 19 vorgesehen. Anstelle solcher Kolben-Zylinder-Anordnungen können selbstverständlich auch andere Antriebsmittel verwendet werden, wie beispielsweise Zahnstangentriebe, Umlauftriebe und dergleichen. Die Kolben-Zylinder-Anordnungen 18 und 19 haben jeweils einen am Träger 4 befestigten Zylinder 20 bzw. 21 mit Kolbenstangen 22 bzw. 23, deren freie Enden an den Schlitten 7 bzw. 12 befestigt sind.

Der Träger 4 ist mit einer weiteren, parallel zur Führung 11 verlaufenden Führung 24 versehen (Fig. 2), die vorzugsweise als Schwalbenschwanznut ausgebildet ist. Längs dieser Führung 24 ist ein Ein-bzw. Auszugsschlitten 25 verfahrbar, der einen quer zur Verschieberichtung verstellbaren Greifer 26 aufweist. Der Schlitten 25 ist mit einer senkrecht zur Führung 24 verlaufenden Führung 27 für den Greifer 26 versehen (Fig. 2). Zum Verschieben des Greifers 26 ist vorzugsweise eine Kolben-Zylinder-Anord nung 28 vorgesehen. Sie hat eine Kolbenstange 29, deren freies Ende mit dem Greifer 26 verbunden ist. Ein am anderen Ende der Kolbenstange 29 vorgesehener Kolben 30 ist in einem Zylinderraum 31 des Schlittens 25 untergebracht. Mit der Kolben-Zylinder-Anordnung 28 kann der Greifer 26 quer gegen das jeweilige Werkzeug 2, 10 verschoben werden. Der Greifer 26 hat zwei Arme 32, 33, die beim Wechseln des Werkzeuges mit einem Sicherungsring 34 zusammenwirken (Fig. 1). Er sitzt drehfest auf der Arbeitsspindel 3 und liegt am Werkzeug 2 an. Zur Lagesicherung des Sicherungsringes 34 dient eine Mutter 35, die auf das freie, mit Gewinde versehene Ende der Arbeitsspindel 3 geschraubt wird.

Zum Verschieben des Schlittens 25 ist vorzugsweise eine weitere Kolben-Zylinder-Anordnung 36 vorgesehen (Fig. 2).

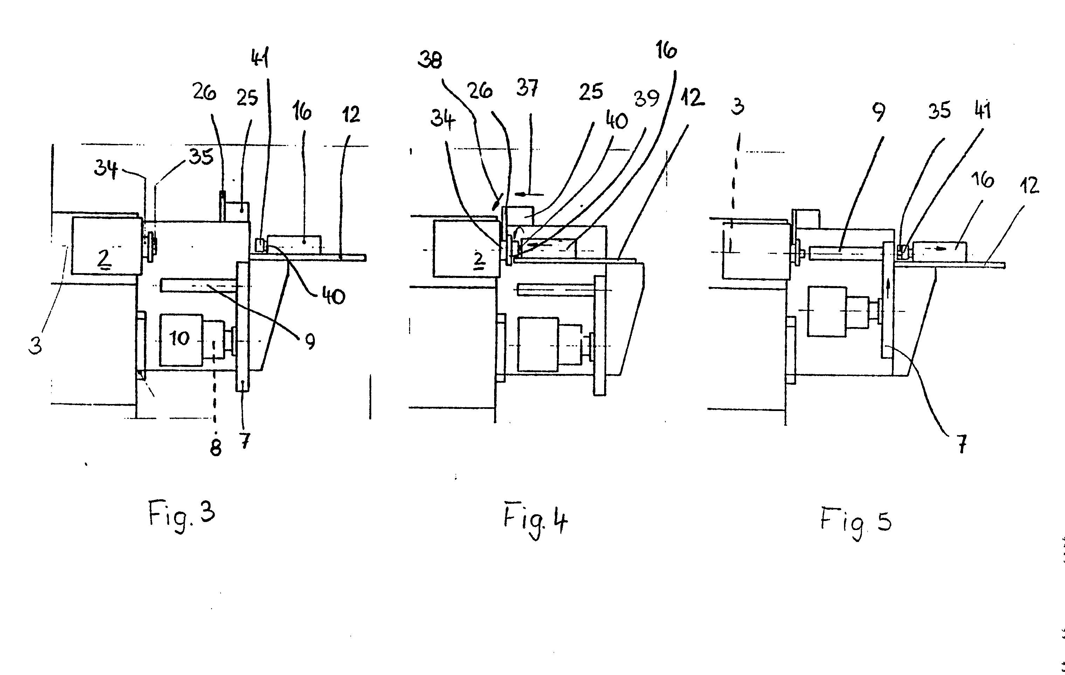

Der Werkzeugwechsel wird nun anhand der Fig. 3 bis 10 erläutert. Die Ausgangsstellung zeigt Fig. 3. Das Werkzeug 2 ist mit dem Sicherungsring 34 und der Mutter 35 auf der Arbeitsspindel 3 axial gesichert und drehfest mit ihr verbunden. Der vertikal verfahrbare Schlitten 7 nimmt seine unterste Lage ein, in der der obere Dorn 9 im Bereich unterhalb des Werkzeuges 2 liegt. Auf dem unteren Dorn 8 ist das einzuwechselnde Werkzeug 10 gelagert und mit dem Sicherungsring 34' auf dem Dorn 8 axial gesichert. Der Sicherungsring 34' stützt sich am Schlitten 7 ab (Fig. 1). Der horizontal verfahrbare Schlitten 12 mit dem Schrauber 16 nimmt seine in Fig. 3 dargestellte Ausgangsstellung ein, in der der Schlitten den größten Abstand vom Werkzeug 2 hat. Auch der Ein-und Auszugsschlitten 25 mit dem Greifer 26 nimmt seine Ausgangslage ein, in der er ebenfalls den größten Abstand vom Werkzeug 2 aufweist. Soll das Werkzeug 2 ausgewechselt werden, dann wird der (nicht dargestellte) Motor der Arbeitsspindel 3 abgebremst. Das Werkzeug 2 befindet sich während des Abbremsvorganges in einer auslaufenden Rotationsbewegung.

Während dieser Rotationsbewegung wird der Ein-bzw. Auszugsschlitten 25 mit der Kolben-Zylinder-Anordnung 36 in Richtung 37 (Fig. 4) längs der Führung 24 verschoben, bis sein Greifer 26 in Höhe des Sicherungsringes 34 liegt (Fig. 4). Dann wird der Greifer 26 mit der Kolben-Zylinder-Anordnung 28 in Richtung des Pfeiles 38 ausgefahren, wobei die Arme 32, 33 des als Gabel ausgebildeten Greifers 26 in den Bereich des Sicherungsringes 34 gelangen. Er ist mit Abflachungen versehen, die mit dem nach Art eines Gabelschlüssels ausgebildeten Greifer 26 zusammenwirken. Da sich die Arbeitsspindel 3 während des Zustellens des Greifers 26 noch in ihrer Auslaufbewegung befindet, rastet der Sicherungsring 34 mit seinen Abflachungen in den Greifer 26 ein. Dadurch wird die Auslaufbewegung der Arbeitsspindel 3 beendet und der Sicherungsring 34 formschlüssig mit dem Greifer 26 verbunden. Damit der Greifer 26 nicht nur in Umfangsrichtung, sondern auch in Axialrichtung formschlüssig mit dem Sicherungsring 34 verbunden werden kann, ist er mit einem Bund 39 versehen, der mit Abstand vom Werkzeug 2 liegt. Der Greifer 26 kann mit seinen Armen 32, 33 dadurch zwischen dem Werkzeug 2 und dem Bund 39 mit dem Sicherungsring 34 in Eingriff gebracht werden. Der Schlitten 12 wird mit der Kolben-Zylinder-Anordnung 19 gegen das Werkzeug 2 verfahren. Hierbei wird der auf dem Schlitten 12 befindliche Schrauber 16 mitgenommen. Seine Abtriebsspindel 40 trägt einen Steckschlüsseleinsatz 41, der mit der Mutter 35 in Eingriff gebracht wird. Die Zustellung des Schraubers 16 kann gleichzeitig mit der Zustellung des Schlittens 25 und des Greifers 26 erfolgen. Durch Drehen der Abtriebsspindel 40 wird der Steckschlüsseleinsatz 41 in Eingriff mit der Mutter 35 gebracht. Mit dem Schrauber 16 kann dann die Mutter 35 von der Arbeitsspindel 3 geschraubt werden. Der Schrauber 16 ist vorzugsweise ein Elektroschrauber, kann aber auch ein Druckluftschrauber sein.

Nach dem Abschrauben verbleibt die Mutter 35 im Steckschlüsseleinsatz 41. Nach Beendigung des Abschraubvorganges wird der Schlitten 12 in seine Ausgangsstellung zurückgefahren (Fig. 5). Anschließend wird der vertikal verfahrbare Schlitten 7 so weit mit der Kolben-Zylinder-Anordnung 18 aufwärts verfahren, bis sein oberer Dorn 9 fluchtend zur Arbeitsspindel 3 liegt.

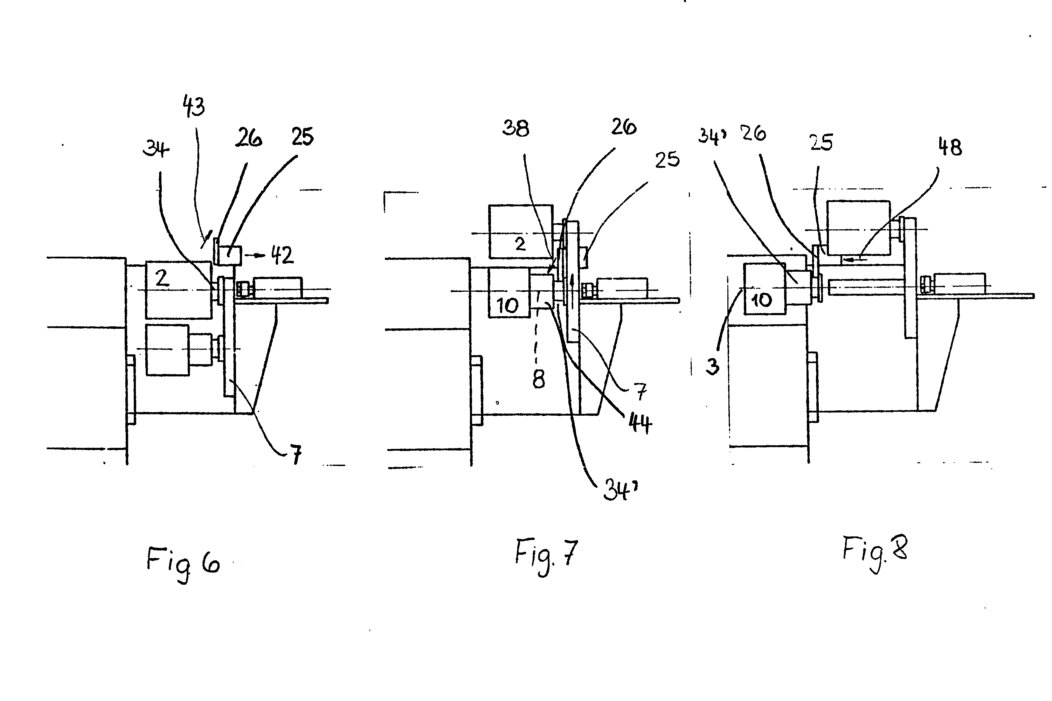

Sobald diese Lage erreicht ist, wird der Ein-bzw. Auszugsschlitten 25 in Pfeilrichtung 42 zurückgefahren. Da sich der Greifer 26 in Eingriff mit dem Sicherungsring 34 befindet, der seinerseits fest mit dem Werkzeug 2 verbunden ist, wird beim Zurückfahren des Schlittens 25 das Werkzeug 2 mitgenommen und auf den Dorn 9 des Schlittens 7 geschoben. Sobald der Sicherungsring 34 am Schlitten 7 zur Anlage kommt, wird der Greifer 26 mit der Kolben-Zylinder-Anordnung 28 in Pfeilrichtung 43 (Fig. 6) zurückgefahren, so daß der Greifer 26 mit seinen Armen 32, 33 außer Eingriff mit dem Sicherungsring 34 gelangt. Der Schlitten 25 befindet sich dann wieder in seiner Ausgangsstellung gemäß Fig. 3.

Nunmehr wird der Schlitten 7 weiter aufwärts verfahren, bis der untere Dorn 8 mit dem auf ihm befindlichen Werkzeug 10 fluchtend zur Arbeitsspindel 3 liegt (Fig. 7). Da sich der Schlitten 25 mit dem Greifer 26 in seiner Ausgangsstellung befindet, kann nunmehr der Greifer 26 wiederum in Pfeilrichtung 38 ausgefahren werden, wobei er mit dem Sicherungsring 34' in Eingriff kommt. Er weist eine Umfangsnut 44 auf, in welche der Greifer eingreifen kann. Der Boden 45 (Fig. 2) der Umfangsnut 44 ist mit zwei diametral einander gegenüberliegenden Abflachungen 46 und 47 versehen, an denen die Arme 32, 33 des Greifers 26 zur Anlage kommen. Dadurch ist der Greifer 26 in Umfangsrichtung formschlüssig mit dem Sicherungsring 34' verbunden. Die Umfangsnut 44 stellt außerdem sicher, daß auch in Axialrichtung der Arbeitsspindel eine formschlüssige Verbindung zwischen dem Greifer 26 und dem Sicherungsring 34' besteht.

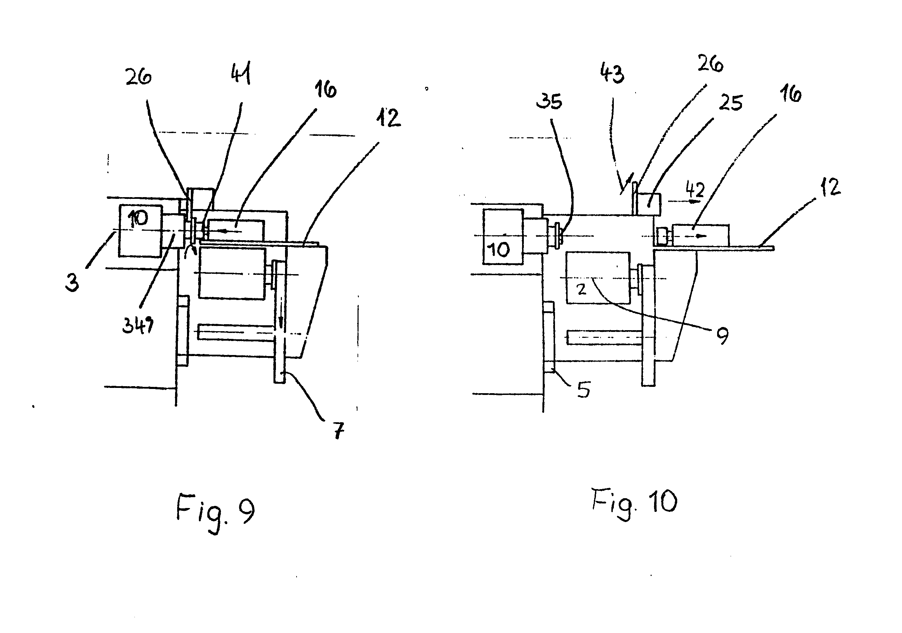

Nach dem Einrasten des Greifers 26 in den Sicherungsring 34' wird der Schlitten 25 in Pfeilrichtung 48 verschoben, wobei der Greifer 26 über den Sicherungsring 34' das Werkzeug 10 mitnimmt und auf die Arbeitsspindel 3 schiebt (Fig. 8). In der in Fig. 8 dargestellten Lage sichert der Greifer 26 das Werkzeug 10 auf der Arbeitsspindel 3, weil die Mutter 35 noch nicht auf die Arbeitsspindel geschraubt ist.

Nach dem Aufschieben des Werkzeuges 10 auf die Arbeitsspindel 3 wird der Schlitten 7 nach unten in die Ausgangsstellung gemäß Fig. 3 gefahren. Dann wird der Schlitten 12 mit dem Schrauber 16 gegen das Werkzeug 10 so weit gefahren (Fig. 9), daß die im Steckschlüsseleinsatz 41 des Schraubers 16 befindliche Mutter 35 auf die Arbeitsspindel 3 geschraubt werden kann. Der Schrauber 16 wird hierzu im entsprechenden Drehsinn angetrieben. Während des Aufschraubens der Mutter 35 ist der Greifer 26 noch in Eingriff mit dem Sicherungsring 34' des Werkzeuges 10, so daß die Mutter zuverlässig aufgeschraubt werden kann. Nach diesem Arbeitsgang ist das Werkzeug 10 fest auf der Arbeitsspindel 3 gespannt.

Der Schlitten 12 mit dem Schrauber 16 wird anschließend in die Ausgangsstellung gemäß Fig. 10 zurückgefahren. Der Greifer 26 wird in Verschieberichtung 43 zurückgefahren, so daß er außer Eingriff mit dem Sicherungsring 34' gelangt. Der Schlitten 25 kann dann in Verschieberichtung 42 in seine Ausgangslage zurückgefahren werden.

Nach diesem Auswechselvorgang wird die Bearbeitungsmaschine 1 in Betrieb genommen. Während des Betriebes der Maschine 1 wird die Werkzeugwechselvorrichtung um die Achse 5 geschwenkt, so daß das auf dem oberen Dorn 9 befindliche Werkzeug 2 abgenommen und durch ein anderes Werkzeug ersetzt werden kann.

Vorzugsweise laufen die anhand der Fig. 3 bis 10 beschriebenen Arbeitsgänge voll-automatisch ab, vorzugsweise über eine Steuerung, so daß der Werkzeugwechsel voll-automatisch durchgeführt werden kann.

Wenn sich auf dem oberen Dorn 9 des Schlittens 7 ein Werkzeug befindet, dann wird der Schlitten 1 zum Auswechseln des auf der Arbeitsspindel 3 sich befindenden Werkzeuges zunächst so weit nach oben gefahren, bis der freie Dorn 8 fluchtend zur Arbeitsspindel liegt. Zum Einwechseln des auf dem unteren Dorn befindlichen Werkzeuges muß dann der Schlitten 7 abgesenkt werden, bis das einzuwechselnde Werkzeug fluchtend zur Arbeitsspindel 3 liegt. Im übrigen läuft der Ein-und Auswechselvorgang in gleicher Weise ab, wie es anhand der Fig. 3 bis 10 zuvor erläutert worden ist.

## Ansprüche

1. Vorrichtung zum Wechseln von Werkzeugen einer Bearbeitungsmaschine, vorzugsweise einer Holzbearbeitungsmaschine, die mit mindestens einer Arbeitsspindel für das Werkzeug versehen ist, dadurch **gekennzeichnet,** daß die Vorrichtung mindestens einen quer zur Arbeitsspindel (3) verstellbaren Träger (7), der mit wenigstens zwei Aufnahmen (8, 9) für die Werkzeuge (2, 10) versehen ist, und mindestens eine parallel zur Arbeitsspindel (3) verstellbare Greifeinrichtung (25, 26) aufweist, die mindestens einen in Eingriff mit dem einbzw. auszuwechselnden Werkzeug (2, 10) bringbaren Greifer (26) aufweist.

2. Vorrichtung nach Anspruch 1, dadurch gekennzeichnet, daß der Träger (7) ein quer zur Arbeitsspindel (3) verschiebbarer Schlitten ist.

3. Vorrichtung nach Anspruch 1 oder 2, dadurch gekennzeichnet, daß der Träger (7) als Aufnahmen (8,9) zwei übereinander angeordnete Aufnahmedorne aufweist, die jeweils in eine zur Arbeitsspindel (3) fluchtende Lage verstellbar sind.

4. Vorrichtung nach einem der Ansprüche 1 bis 3, dadurch gekennzeichnet, daß die Greifeinrichtung (25,26) einen den Greifer (26) tragenden Schlitten (25) aufweist, der parallel zur Arbeitsspindel (3) verfahrbar ist, und daß der Greifer (26) vorzugsweise quer zur Verschieberichtung (37) des Schlittens (25) verstellbar ist.

5. Vorrichtung nach einem der Ansprüche 1 bis 4, dadurch gekennzeichnet, daß der Greifer (26) nach Art eines Gabelschlüssels ausgebildet ist.

6. Vorrichtung nach einem der Ansprüche 1 bis 5, dadurch gekennzeichnet, daß dem Greifer (26) ein Mitnehmer (34,34') am Werkzeug (2,10) zugeordnet ist, der vorzugsweise ein Sicherungsring ist, und daß vorzugsweise der Greifer (26) in Axialrichtung der Arbeitsspindel (3) und in Umfangsrichtung des Mitnehmers (34,34') formschlüssig mit ihm verbindbar ist.

7. Vorrichtung nach Anspruch 6, dadurch gekennzeichnet, daß der Mitnehmer (34) einen Bund (39) als Axialanschlag für den Greifer (26) aufweist.

8. Vorrichtung nach Anspruch 6 oder 7, dadurch gekennzeichnet, daß der Mitnehmer (34') eine Umfangsnut (44) aufweist, in die der Greifer (26) eingreift.

9. Vorrichtung nach einem der Ansprüche 1 bis 8, dadurch gekennzeichnet, daß sie einen parallel zur Arbeitsspindel (3) verstellbaren weiteren vorzugsweise als Schlitten ausgebildeten Träger (12) aufweist, der mindestens ein Löse-und Einspanngerät (16) trägt, das vorzugsweise ein Schrauber ist.

10. Vorrichtung nach einem der Ansprüche 1 bis 9, dadurch gekennzeichnet, daß das Werkzeug (2,10) mit einer Mutter (35) auf der Arbeitsspindel (3) eingespannt ist, und daß vorzugsweise das Löse-und Einspanngerät (16) einen Steckschlüsseleinsatz (40) für die Mutter (35) aufweist.

11. Vorrichtung nach einem der Ansprüche 1 bis 10, dadurch gekennzeichnet, daß sie - schwenkbar an der Bearbeitungsmaschine (1) gelagert ist.

12. Vorrichtung nach einem der Ansprüche 1 bis 11, dadurch gekennzeichnet, daß sie als Anbaueinheit ausgebildet ist.

Fig. 1

0 239 909

Fig. 2

0 239 909

Fig. 3

Fig. 4

Fig. 5

Fig 6

Fig. 7

Fig. 8

Fig. 9

Fig. 10

0 239 909